# EUROPEAN PATENT SPECIFICATION

(11) **EP 4 015 127 B1**
(45) Date of publication and mention of the grant of the patent: **11.02.2026**
(21) Application number: 20215376.3
(22) Date of filing: 18.12.2020
(51) Int. Cl.: E21B 10/08, E21B 10/52, B23K 9/04, B23K 9/067

(54) **HARDFACED ROTARY DRILL BIT**
AUFTRAGSBESCHICHTETER DREHBOHRMEISSEL
TRÉPAN DE FORAGE ROTATIFS CHARGÉS PAR SOUDAGE DE MÉTAL DUR

(43) Date of publication of application: 22.06.2022
(73) Proprietor: Sandvik Mining and Construction Tools AB, 811 34 Sandviken (SE)
(72) Inventor: KRAFT, Hanna, 81181 Sandviken (SE); FÄLLSTRÖM, Stefan, 81181 Sandviken (SE); ANDERSSON, Erik, 81181 Sandviken (SE)
(74) Representative: Sandvik

(56) References cited:
- WO-A1-2018/042171
- WO-A1-2019/043369
- WO-A1-99/36590
- WO-A2-2010/129507
- US-A- 4 592 252
- US-A- 4 630 692
- US-A- 5 740 872
- US-A1- 2001 015 290
- US-B2- 10 086 462
- US-B2- 9 624 730
- RAJEEV G P ET AL: "Comparison of microstructure, dilution and wear behavior of Stellite 21 hardfacing on H13 steel using cold metal transfer and plasma transferred arc welding processes", SURFACE AND COATINGS TECHNOLOGY, ELSEVIER, NL, vol. 375, 10 July 2019 (2019-07-10), pages 383 - 394, XP085803766, ISSN: 0257-8972, [retrieved on 20190710], DOI: 10.1016/J.SURFCOAT.2019.07.019

## Description

### Technical field

The present invention relates to a rotary drill bit and especially to a hardfaced rotary drill bit and method of producing thereof.

### Background

Rotary drill bits are mounted on the lower end of a drill string and are rotated to engage with rock and earth to form a borehole. Rotary drill bits comprise a body and several legs and rolling rotary cones, usually three of each. A plurality of cemented carbide inserts are pressed into holes in the surfaces of the rotary cones for bearing on the rock formation being drilled to penetrate and fracture the rock.

The rotary cones are typically made of low carbon alloy steel and a common problem is that the steel around the inserts gets extensively worn. The issue with this is that as the steel support around the inserts is worn away, the inserts may fall out, the rate of penetration is decreased, and the drilling economics are reduced. It is therefore desirable to reduce steel wear. Further, during drilling with rotary cone drill bits, debris often passes between the cone gauge surface and the wall of the borehole. As a result, the edge of the shirttail tip of each leg which leads in the direction of rotation of the drill bit during drilling, i.e., the leading edge, can become worn. As this wear progresses, it ultimately exposes the cone bearing to borehole debris eventually causing bearing failure. A hardfacing may be applied to these areas in order to increase wear resistance.

The secondary bearing surface on the snoochie face of the leg of a rotary drill bit may be also weld inlayed with a hard metal material, which has higher hardness and is more wear resistant than the base material onto which it is inlayed, to improve wear resistance. The type of wear in this case is not abrasive, rather adhesive.

US5740872 discloses hardfacings for the teeth of steel tooth cutter drill bits, WO2010/129507 discloses the application of a wear resistant layer to downhole tools, US10086462 discloses a method of hardfacing a metal component and US2001/015290 A1 discloses a roller cone for a rock bit. The roller cone includes a cone substrate and hardfacing applied by a welding process in grooves on the exterior surface of the cone substrate. The roller cone also includes hardfacing applied by a thermal spraying process to insert lands on the exterior surface of the cone substrate after heat treating and drilling the sockets.

Known solutions to apply a hardfacing to the steel in between the inserts and on the outer diameter of the rolling cone and on the snoochie, leading edge and shirttail of the legs include using techniques such as metal active gas welding (MAG) and metal inert gas welding (MIG) or tungsten inert gas (TIG) such as that shown in patents CA2477644C and EP303419B1. However, the problem with these types of hardfacing methods is that there is high thermal input and therefore distortion of rotary cone and / or leg can occur. Further, when using MIG/MAG welding there are issues of weld spatter, which is a problem for example in that areas of the cone or leg where the inserts are to be positioned are weld spattered which therefore causes problems during the drilling as the weld spatter is hard compared to the steel. So, in order to circumvent this issue with MIG/MAG, additional manufacturing steps of applying a protective paint to prevent the adhesion of weld spatter to the surface of the insert lands and then steel blasting the painted areas to remove the paint again afterwards are required. This adds time and cost to the manufacturing process. The TIG welding process has the disadvantage of being more difficult to automate and is a slower process.

Therefore, the problem to be solved is how to provide a hardfacing to rotary drill bits that is able to decrease steel wear and therefore increased service life and also provide a method for hardfacing that results in reduced distortion, less weld spattering, that is quick to apply and able to be automized.

### Summary

It is an objective of this invention to provide a novel and improved hardfaced layer on a rotary drill bit. The objective is achieved by providing a rotary drill bit according to claim 1 comprising a rotary cone and a leg; wherein at least one section of the rotary cone and / or the leg is a substrate that has a hardfaced layer applied thereto characterized in that the substrate dilution of the steel into the hardfaced layer is less than 5%, preferably less than 4.5%, more preferably less than 4%; "Substrate dilution" is defined as the percentage of the substrate metal which has diffused into the binder matrix. This can be measured by various methods; for example by comparing the ratio between a substrate melted area to a total melted area; wherein the substrate melted area is the transversal cross-sectional area of the drill string component that has been melted by the hardfacing process; and wherein the total melted area is the combined transversal cross-sectional area of the hardfacing layer and the substrate melted area. The term "at least one section of the rotary cone and / or leg" means at least one area on the surface of one of these components.

Substrate dilution in weight percent, wt%, could also be assessed on a transversal cross section of one weld pass using Scanning Electron Microscopy (SEM), for example with an acceleration voltage of 20kV, magnification 30x, secondary electron mode, working distance (WD) 10 mm, using Energy-dispersive X-ray spectroscopy (EDS), using a line scan of 1000 microns from the fusion line (as defined as being the boundary between the substrate melted area and the substrate), with a resolution of 512 points, with a dwell time of 500ms, plotting the variation in iron (Fe) to determine the extent of the substrate dilution.

Advantageously, this indicates that the dilution of the parent steel material from the substrate, which could be one or more areas of the rotary cone and / or one or more areas of the leg of the rotary drill bit, into the hardfaced layer is reduced and therefore a purer hardfaced layer is achieved. The reduction in dilution is important as it provides an increase in the wear resistance of the hardfaced layer. Typically, the thickness of the hardfaced layer is between 1-2 mm.

The hardfaced layer may comprise at least one of a carbide or a boride of a metal selected from group IVA, VA, VIA and XA transition metals in combination with a nickel-based matrix. Advantageously, the presence of these phases provides higher wear resistance.

The substrate melted area may comprise no or only a negligible amount of M₆C where M is a combination of iron and a metal selected from group IVA, VA, VIA and XA transition metals. Detrimental carbides are formed due to dissolved carbon from the hardfacing material reacting with iron from either the hardfacing layer or substrate steel due to dilution. The carbide formed is defined as having the atomic relation M₆C where M is a combination of iron and the metals selected from group IVA, VA, VIA and XA transition metal and can be distinguished by its fishbone morphology using SEM. Due to the nature of the solidification mechanism, the M₆C phase forms a lamellar inter-dendritic eutectic structure. Due to the atomic configuration the phase will appear in similar contrast to the primary WC-carbides compared to the metallic matrix and will appear as a bright phase when detecting using back-scattered electrons. By the phrasing "fishbone morphology" a structure is described as having branching lamellae, branching orthogonally from the center or near the dendrite-carbide interface. Due to differences in cutting and sample preparation the exact morphology will vary, but the overall inter-dendritic eutectic structure, which will appear in similar contrast to the monocrystalline primary WC-carbides compared to the metallic matrix and will appear as a bright phase when detecting using back-scattered electrons will be retained. These phases are detrimental as they have a negative effect on the mechanical properties, such as increased cracking, they are more brittle. By "no or a negligible amount of M₆C" it is meant that none of these phases can be seen when the substrate melted area is examined using SEM with the setting of 500x magnification and 15kV of acceleration voltage.

The hardfaced layer may be applied to at least one outer diameter region on the rotary cone. The outer diameter regions on the rotary cone are the areas axially in between the rows of inserts, which are free of any inserts, which allow space for the inserts from adjacent rotary cones to pass by. In this case, the substrate is the at least one outer diameter region. Typically, a nickel-based flux cored welding wire filled with tungsten-based hard phases having a carbide volume content of 48 to 66 %, depending on wire diameter, is used for hard-facing in the outer diameter region(s). Advantageously, the wear resistance on the outer diameter regions of the cone is therefore improved.

The rotary cone may comprise at least one insert land wherein holes can be drilled for positioning of inserts and the hardfaced layer is applied to the at least one insert land in the areas in-between the locations where the holes are to be drilled for insertion of the inserts. The hardfacing layer is normally applied before the holes are drilled for the inserts to be pressed into, in this embodiment in the areas in-between where the holes are to be drilled will be hard-faced. Typically, a nickel-based flux cored welding wire filled with tungsten-based hard phases having a carbide volume content of 48 to 66 %, depending on the wire diameter, is used in this section. Advantageously, the wear resistance on insert lands in-between the inserts is therefore improved.

The hardfaced layer is applied to the whole area of an insert land. In this case, the substrate is the whole area of the insert land, this includes the areas on the insert land where the holes will be drilled to press the inserts into. Advantageously, this improves the wear resistance on the insert lands and also means that a larger area of the insert land is protected, which will increase the lifetime of the rotary cone. Typically, an iron-based solid welding wire consisting of carbide forming metals selected from group IVA, VA, VIA transition metal, known as tool steel, is used for the hard-facing in this embodiment.

The hardfaced layer may be applied to a leading edge of the leg. In this case, the substrate is the leading edge of the leg. Advantageously, this increases the wear resistance of the leg. Typically, an iron-based flux cored welding wire filled with tungsten-based hard phases having a carbide volume content of 50 to 60 %, depending on the wire diameter is used in this area.

The hardfaced layer may be applied to a shirttail on the leg. In this case, the substrate is the shirttail of the leg. Advantageously, this increases the wear resistance of the leg. Typically, an iron-based flux cored welding wire filled with tungsten-based hard phases having a carbide volume content of 50 to 60 %, depending on the wire diameter is used in this area.

The hardfaced layer may be applied to a snoochie face on the leg. In this case, the substrate is the snoochie face on the leg. Advantageously, this increases the hardness and wear resistance of the snoochie face. Typically, a cobalt based alloy with additions of Cr, C and W is used in this area.

The hardfaced layer could be applied to one or more of the areas mentioned hereinabove in any combination and / or the hard-faced layer could be applied to other areas of the rotary drill bit where wear protection is required.

Another aspect of the invention is a method of hardfacing a rotary drill bit according to claim 2 using cold metal transfer (CMT) comprising the steps of:
- contacting a surface of a rotary drill bit with a hardfacing filler metal connected to a welding nozzle to establish an arc between the surface and the filler metal and form a molten weld pool comprising the filler metal and a material of the surface;
- extending the filler metal into the molten weld pool to short circuit the arc;
- withdrawing the filler metal from the molten weld pool to re-establish the arc;
- moving the welding nozzle along the surface; and
- re-extending the filler metal into the molten weld pool to short circuit the arc, depositing additional filler metal into the molten weld pool, and liquifying additional material of the surface into the molten weld pool.

Advantageously, this method results in low dilution of the base material into the hardfaced layer, therefore providing a purer hardfaced layer. Further, this method results in very low or even no spatter, therefore eliminating the need to add the steps of applying and then removing a protective paint, for example by shot blasting, during the production process, which means that the production process is simplified. Additionally, the CMT process is well suited to automation. This method also provides a hardfacing layer having improved wear resistance. As the process is conducted at a lower temperature compared to other hardfacing techniques this also means that distortion of the components, such as the rotary cone, is reduced. This is advantageous in the production process as the rough machining can be eliminated if the distortion is reduced.

The filler metal may be in the form of a nickel-based flux cored welding wire filled with tungsten-based hard phases having a carbide volume content of 48 to 66 %. Cored wires are also known as tubular wires. The carbide volume used will depend on the diameter of the wire used. This type of wire is typically used for hardfacing the outer diameter regions of the cone. Advantageously, this type of wire will produce hardfacing deposits that are extremely resistant to abrasive and erosive particles, while remaining very ductile. Deposits made using this type of wire are essentially crack-free or have a reduced number of cracks compared to alternatives with very uniform carbide distributions and provide outstanding wear resistance. A crack-free hardfacing weld is beneficial in improving the abrasive and erosion resistance, also a hardfacing layer with cracks can suffer from spalling, which is undesirable. Another risk of having cracks in the hardfacing is that they can propagate into the steel, leading to the whole cone cracking and the bit failing. In one embodiment of the method, the filler material is an iron-based flux cored welding wire filled with tungsten-based hard phases having a carbide volume content of 50 to 60 %. The carbide volume used will depend on the diameter of the wire used. Typically, this type of wire is used for hardfacing the shirttail and the leading edge of the leg. Abrasive wear is the primary wear mechanism in this area of the bit. The combination of high matrix hardness and the hardness of the carbides in this type of filler wire is beneficial in this application.

The filler material is an iron-based solid welding wire consisting of carbide forming metals selected from group IVA, VA, VIA transition metal. Typically, this type of wire is used for hardfacing the insert lands on the rotary cones. Advantageously, this type of wire enables a hard-faced layer to be applied to the whole area of the cone where in the inserts are attached, as opposed to only in-between them because the hardfacing layer applied using a solid welding wire consisting of carbide forming metals selected from group IVA, VA, VIA transition metal, where the hardening mechanism is precipitation hardening in contrast to previously described wires where the hardening mechanism is due to the metal matrix composite formed. The machinability is therefore much greater and therefore is able to be drilled through. Therefore, an increased area of the cone is protected by the hardfaced layer meaning risk of detachment of the inserts is decreased.

The filler material may be a cobalt based alloy with additions of Cr, C and W. Typically, this type of wire is used for hardfacing the snoochie face of the leg. The hardfacing applied to this surface is chosen due to its very good high temperature properties, such as high hardness, low wear resistance and low coefficient of friction at elevated temperatures. The hardness required in the application is dependent on chemical composition and/or substrate dilution. Dilution of Fe from the substrate in regular MAG welding will reduce the hardness of the cobalt based hardfacing, increasing the risk of adhesive wear and ultimately failure of the component. The CMT process reduces dilution and therefore counteracts this risk, maintaining the inherent hardness of the cobalt based hardfacing, which is a major factor in maintaining adhesive wear resistance of the component.

### Brief description of the drawings

A specific implementation of the present invention will now be described, by way of example only, and with reference to the accompanying drawings:
Figure 1: Perspective view of a rotary drill bit.
Figure 2: Perspective view of a rotary cone of a rotary drill bit.
Figure 3a: Perspective side view of a leg of a rotary drill bit.
Figure 3b: Perspective top down view of a leg of a rotary drill bit.
Figure 4: Schematic drawing of CMT process for deposition of the hardfacing layer.
Figure 5: Schematic drawing to illustrate how dilution of the substrate into the hardfaced layer is measured.
Figure 6: EDS line scan of Fe content in hardfaced layer comparing MAG and CMT welding methods.
Figure 7a: SEM image of hardfaced layer produced using MAG method at x500 magnification.
Figure 7b: SEM image of hardfaced layer produced using MAG method at x2000 magnification.
Figure 8: SEM image of hardfaced layer produced using CMT method at x500 magnification.

### Detailed description

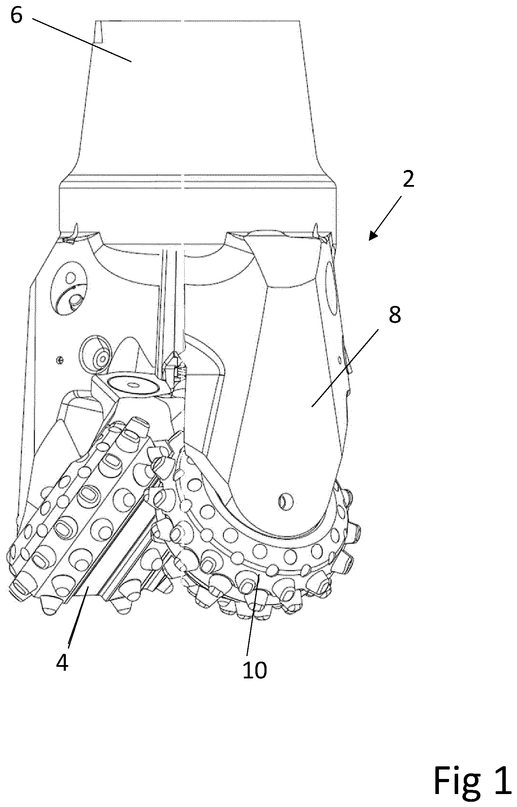

Figure 1 shows a rotary drill bit 2 for rock drilling. The rotary drill bit 2 comprises a cutting end 4 at an axially forward position and an axially rearward attachment end 6 configured for mounting at one end of a drill string (not shown) forming part of a drilling assembly operated via a drill rig (not shown) configured to provide axial and rotational drive to the rotary drill bit 2. The rotary drill bit 2 comprises three legs 8, also known as journal legs, that project axially forward from the attachment end 6 and are aligned slightly radially outward such that the cutting end 4 comprises a generally larger cross section than the attachment end 6. A generally conical shaped rotary cone 10, otherwise known as a cone, is mounted at the end of each leg 8 so as to be capable of rotation relative to the leg 8 and independent rotation about a separate axis relative to a general rotation of the rotary drill bit 2 and the drill string (not shown). Each rotary cone 10 comprises a generally cone or dome shaped configuration.

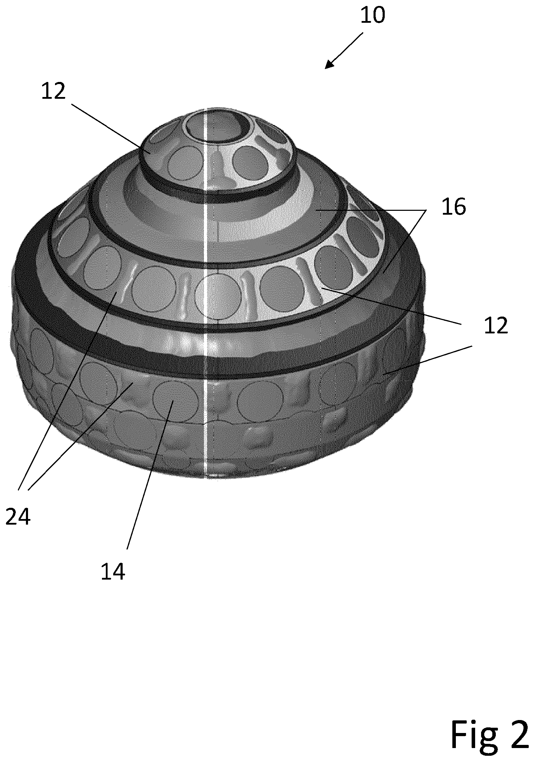

Figure 2 shows one of the rotary cones 10 in more detail. The rotary cone 10 comprises a plurality of insert lands 12, typically there are three insert lands 12 on each rotary cone but there could be more or less than this, which are regions on the rotary cone 10 where holes 14 are drilled for inserts (not shown), otherwise known as buttons, can be embedded into for disintegrating the rock formations being drilled as the rotary drill bit 2 is rotated and moved downwards. The inserts are typically made from cemented carbide. Axially in-between each insert land 12 is an outer diameter region 16, which is kept free of inserts. The purpose of the outer diameter regions 16 is to allow space for the inserts from the adjacent rotary cones 10 to pass through as they rotate. Typically, there are between one and four outer diameter regions 16. A hardfaced layer 24 may be applied to one or more of the outer diameter regions 16 and / or to one or more of the insert lands 12. When the hardfaced layer 24 is applied to the insert land 12, it may be only in the positions in-between where the holes 14 will be drilled for the inserts to be pressed into or it could be applied to the entire area of the insert land 12, including the areas where the holes 14 will be drilled for the inserts to be pressed into.

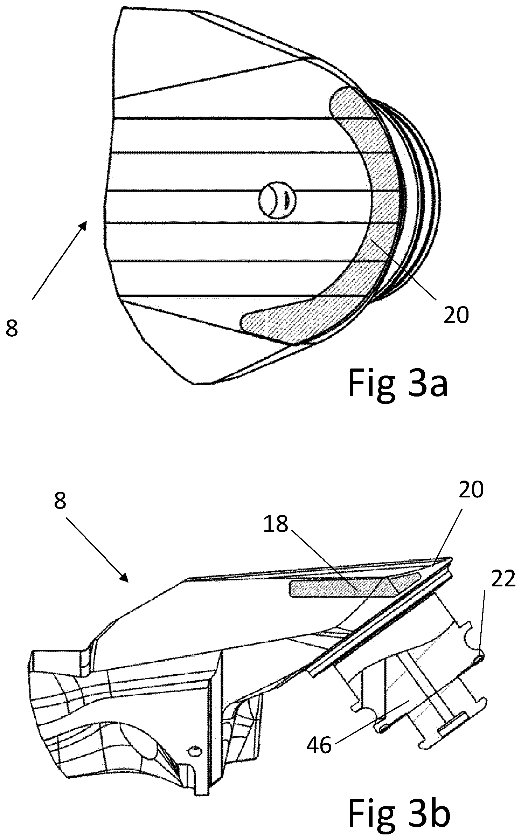

Figure 3a shows one of the legs 8 in more detail from a side view and figure 3b shows one of the legs 8 in more detail from a top down view and highlights the sections where a hardfaced layer 24 may be applied. The first section is on a leading edge 18, the second section is on a shirttail 20 and the third section is a snoochie face 22 (otherwise known as a secondary thrust surface or secondary bearing surface), which is axially forward facing surface of a spindle 46 positioned on the leg 8.

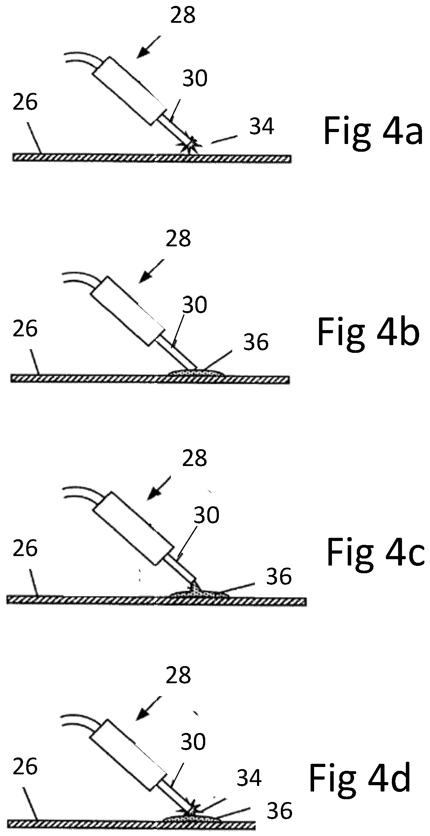

Figures 4a-d shows that a hardfaced layer 24 is applied to one or more areas on the rotary drill bit 2 using a cold metal transfer (CMT) process.

Figure 4a discloses a first step of contacting a surface 26 of a rotary drill bit 2 with a hardfacing filler metal 30, otherwise known as a wire, connected to a welding nozzle 28 to establish an arc 34 between the surface 26 of the rotary drill bit 2 and the filler metal 30 and form a molten weld pool 36 (shown on figure 4b) comprising the filler metal 30 and a material of the surface 26;
Figure 4b shows a second step of extending the filler metal 30 into the molten weld pool 36 to short circuit the arc 34;
Figure 4c shows a third step of withdrawing the filler metal 30 from the molten weld pool 36 to re-establish the arc 34; The welding nozzle 28 is then moved along the surface 26;
Figure 4d shows a fourth step of re-extending the filler metal 30 into the molten weld pool 36 to short circuit the arc 34, depositing additional filler metal 30 into the molten weld pool 36, and liquifying additional material of the surface 26 into the molten weld pool 36.

For gas metal arc welding, the wire / filler metal 30 is continuously fed by using a motor / wire feeder (not shown) at a distance from the welding nozzle 28 to minimize the weight being carried and to maximize the torch accessibility. CMT uses a second push-pull motor (not shown) that is installed close to the welding nozzle 28 to help stabilize wire feeding, along with an arm in a separate box (not shown) extending the wire conductor (not shown) to facilitate the rapidly pushing and pulling of the filler metal 30 after the droplet touches the weld pool 36. The droplet can then be successfully separated from the filler metal 30 and transferred into the weld pool 36, and the arc 34 is re-established during the separation process. During the separation and arc re-establishment, the current drops to near-zero and thereby any spatter generation is avoided. As soon as the short circuit happens, the filler metal 30 is pulled back. This means that in the arcing phase, the arc 34 itself only inputs heat very briefly.

As previously discussed, it is advantageous for the dilution of the substrate (i.e. the part of the rotary drill bit that is being hardfaced) into the hardfaced layer to be as low as possible.

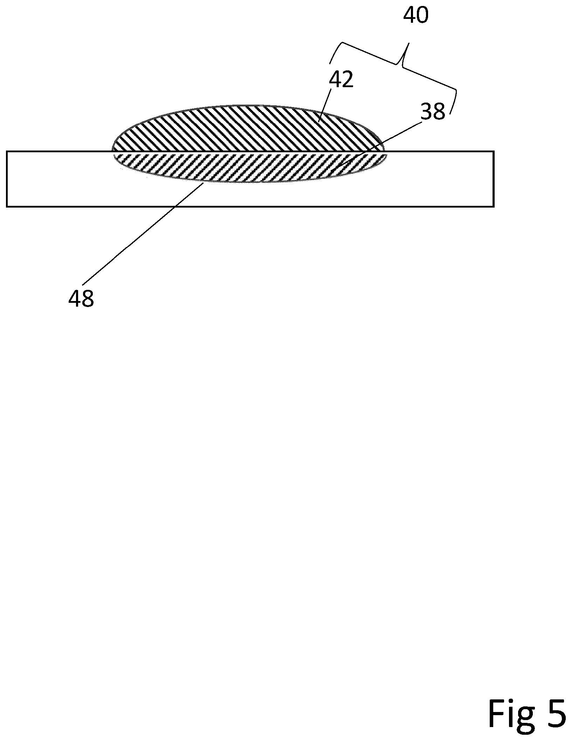

Figure 5 shows a schematic drawing of how the dilution was measured in the present application. The substrate melted area 38 is the transversal cross-sectional area of the drill string component that has been melted by the hardfacing process. The cross section is taken by cutting from above the hardfaced layer 42 and cutting downwards through the hardfaced layer 42 and into the substrate below (i.e. the rotary cone or leg of the rotary drill bit). For example, the cross section could be taken at a midpoint along the hardfaced layer 42. The total melted area 40 is the combined transversal cross-sectional area of the hardfacing layer 42 and the substrate melted area 38. The dilution of the steel from the substrate to the steel in then calculated from the ratio of the substrate melted area 38 to the total melted area 40 multiplied by 100. For example, this could be calculated using the number of pixels measured from a light optical microscope image taken of a cross section of a section on the rotary drill bit that has been hardfaced.

### Examples

### Example 1 - Dilution of the steel from the substrate into the hardfaced layer by comparing the ratio between a substrate melted area to a total melted area

Sample A is an example of a hardfaced layer produced by MAG using nickel-based flux-cored wire on a low carbon chromium-molybdenum alloy steel. Sample B is an example of a hardfaced layer produced by CMT using nickel-based flux-cored wire on a low carbon chromium-molybdenum alloy steel. Both samples were made according to the ASTM G65 standard and were sectioned transversely to determine the microstructure. The % of dilution of the steel from the substrate into the hardfaced layer is shown in table 1.

**Table 1: Dilution of steel from substrate to hardfaced layer**

| Sample | Hardfacing method used | Substrate melted area | Total melted area | Dilution of steel from the substrate into the hardfaced layer [%] |
|---|---|---|---|---|
| A | MAG | 157537 | 1020854 | 15.4 |
| B | CMT | 12803 | 911374 | 1.4 |

It can be seen that the dilution of the steel from the substrate into the hardfaced layer is significantly lower when the CMT method is used.

### Example 2 - Dilution of steel from the substrate into hardfaced later measured using a line scan with EDS in SEM

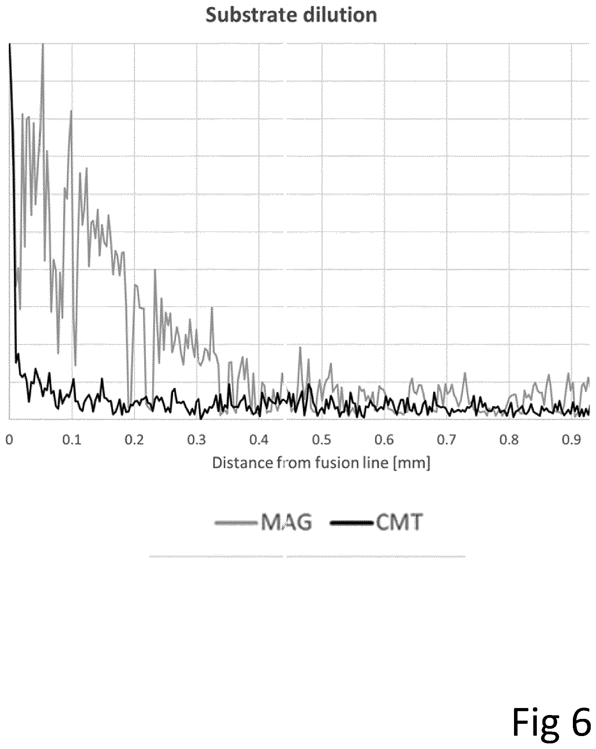

This was determined for CMT and MAG welds using nickel-based flux-cored wire on a low carbon nickel-chromium-molybdenum alloy steel, where the transversal cross section of one weld pass was investigated using scanning electron microscopy (SEM), with an acceleration voltage of 20kV, magnification 30x, secondary electron mode, working distance (WD) 10 mm, using Energy-dispersive X-ray spectroscopy (EDS), using a linesman of 1000 microns from the fusion line (as defined as being the boundary between the substrate melted area and the substrate, referenced as 48 in Figure 5), with a resolution of 512 points, with a dwell time of 500ms, plotting the variation in iron (Fe). Figure 6 shows the EDS line scan comparing the dilution from MAG and CMT hardfaced layers. It can be seen that the Fe-content in the hardfaced layer produced using CMT is significantly lower than in the hardfaced layer produced using MAG, therefore showing that the dilution of the steel substrate into the hardfaced layer is lower for the CMT method.

### Example 2 - M₆C phases

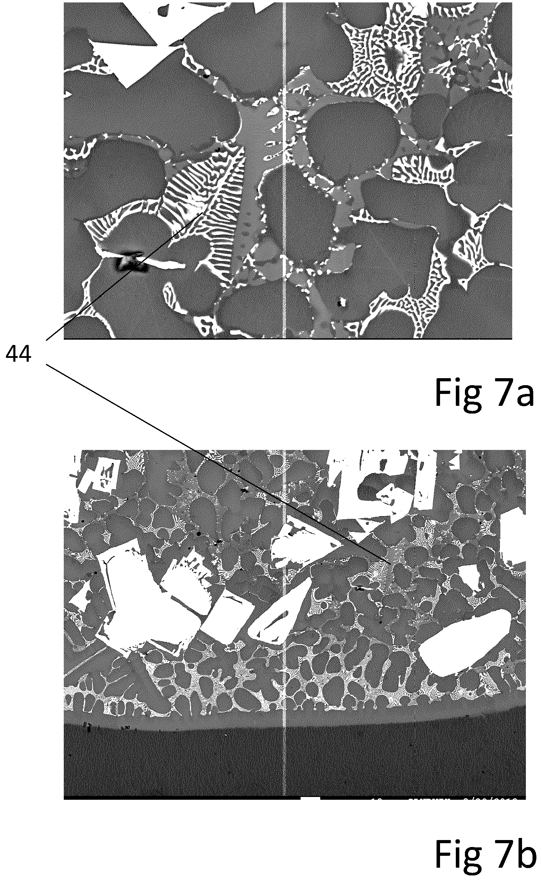

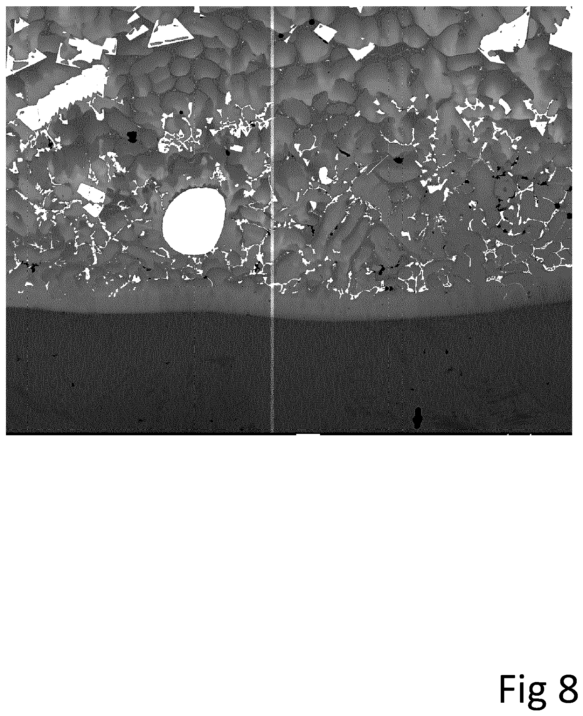

SEM images were taken, the presence of fishbone morphology is used to distinguish the presence of M₆C. Figure 7a is an SEM image of example of when the hardfaced layer is produced by MAG using nickel-based flux-cored wire on a low carbon chromium-molybdenum alloy steel where it can be seen that M₆C is present when the hardfaced layer taken at x500 magnification. The M₆C is highlighted on figure 7a by the reference number 44. Figure 7b shows a higher magnification image (x2000 magnification) of the same sample shown in figure 7a wherein the fishbone morphology of the M₆C 44 can be seen in more detail. Figure 8 shows an example where the hardfaced layer is produced by CMT using nickel-based flux-cored wire on a low carbon chromium-molybdenum alloy steel, it can be seen that there is no M₆C present when the hardfaced layer is applied using CMT. Both samples were made according to the ASTM G65 standard and were sectioned transversely to determine the microstructure.

### Example 3 - Wear test

ASTM G65 abrasive wear testing was performed on hardfaced layers using a Ni based wire, welded on steel samples made from low carbon chromium-molybdenum alloy steel, with dimensions according to the ASTM G65 standard. The wear tests showed that there was 26% improvement in wear resistance when the hardfaced layer was applied using CMT rather than MAG.

## Claims

1. A rotary drill bit (2) comprising at least one rotary cone (10) and at least one leg (8);
wherein at least one section of the rotary cone (10) and / or the leg (8) is a substrate that has a hardfaced layer (24) applied thereto;
the substrate dilution of the steel into the hardfaced layer (24) is less than 5% as measured by comparing the ratio between a substrate melted area (38) to a total melted area (40);
wherein the substrate melted area (38) is the transversal cross-sectional area of the rotary drill bit that has been melted by the hardfacing process; and
wherein the total melted area (40) is the combined transversal cross-sectional area of the hardfacing layer (42) and the substrate melted area (38);
wherein
the hardfaced layer (24) is applied to the whole area of an insert land (12).

2. A method of hardfacing a rotary drill bit (2) to produce the rotary drill bit of claim 1 using cold metal transfer (CMT) comprising the steps of:
- contacting a surface (26) of a rotary drill bit (2) component with a hardfacing filler metal (30) connected to a welding nozzle (28) to establish an arc (34) between the surface (26) and the filler metal (30) and form a molten weld pool (36) comprising the filler metal (30) and a material of the surface;
- extending the filler metal (30) into the molten weld pool (36) to short circuit the arc (34);
- withdrawing the filler metal (30) from the molten weld pool (36) to re-establish the arc (34);
- moving the welding nozzle (28) along the surface (26); and
- re-extending the filler metal (30) into the molten weld pool (36) to short circuit the arc (34), depositing additional filler metal (30) into the molten weld pool (36), and liquifying additional material of the surface (26) into the molten weld pool (36);
wherein
the filler metal (30) is an iron-based solid welding wire consisting of carbide forming metals selected from group IVA, VA, VIA transition metal.

## Patentansprüche

1. Drehbohrmeißel (2), der mindestens einen Drehkegel (10) und mindestens einen Schenkel (8) umfasst;
wobei mindestens ein Abschnitt des Drehkegels (10) und/oder des Schenkels (8) ein Substrat ist, das eine darauf aufgebrachte gepanzerte Schicht (24) aufweist;
die Substratverdünnung des Stahls in die gepanzerte Schicht (24) geringer als 5 %, durch Vergleichen des Verhältnisses zwischen dem aufgeschmolzenen Substratbereich (38) und dem gesamten aufgeschmolzenen Bereich (40) gemessen, ist;
wobei der aufgeschmolzene Substratbereich (38) der transversale Querschnittsbereich des Drehbohrmeißels ist, der durch den Panzerungsprozess aufgeschmolzen worden ist; und
wobei der gesamte aufgeschmolzene Bereich (40) der kombinierte transversale Querschnittsbereich der Panzerungsschicht (42) und der aufgeschmolzene Substratbereich (38) ist;
wobei die gepanzerte Schicht (24) auf den gesamten Bereich eines Einsatzsteges (12) aufgebracht wird.

2. Verfahren zum Panzern eines Drehbohrmeißels (2), um den Drehbohrmeißel nach Anspruch 1 unter Verwendung von Cold Metal Transfer (CMT) herzustellen, umfassend die Schritte zum:
- In-Kontakt-bringen einer Oberfläche (26) einer Komponente eines Drehbohrmeißels (2) mit einem Panzerungsfüllmetall (30), das mit einer Schweißdüse (28) verbunden ist, um einen Lichtbogen (34) zwischen der Oberfläche (26) und dem Füllmetall (30) aufzubauen und ein geschmolzenes Schweißbad (36) zu bilden, welches das Füllmetall (30) und ein Material der Oberfläche umfasst;
- Erweitern des Füllmetalls (30) in das geschmolzene Schweißbad (36), um den Lichtbogen (34) kurzzuschließen;
- Entnehmen des Füllmetalls (30) aus dem geschmolzenen Schweißbad (36), um den Lichtbogen (34) wieder aufzubauen;
- Bewegen der Schweißdüse (28) entlang der Oberfläche (26); und
- erneut Erweitern des Füllmetalls (30) in das geschmolzene Schweißbad (36), um den Lichtbogen (34) kurzzuschließen, Abscheiden von zusätzlichem Füllmetall (30) in das geschmolzene Schweißbad (36) und Verflüssigen von zusätzlichem Material der Oberfläche (26) in das geschmolzene Schweißbad (36);
wobei das Füllmetall (30) ein eisenbasierter fester Schweißdraht ist, der aus karbidbildenden Metallen besteht, die aus der Gruppe von IVA-, VA-, VIA-Übergangsmetall ausgewählt werden.

## Revendications

1. Trépan de forage rotatif (2) comprenant au moins un cône rotatif (10) et au moins une jambe (8) ;
dans lequel au moins une section du cône rotatif (10) et/ou de la jambe (8) est un substrat sur lequel est appliquée une couche de rechargement (24) ;
la dilution du substrat de l'acier dans la couche de rechargement (24) est inférieure à 5 % mesurée en comparant le rapport entre une zone fondue du substrat (38) et une zone fondue totale (40) ;
dans lequel la zone fondue du substrat (38) est la section transversale du trépan de forage rotatif qui a été fondue par le procédé de rechargement ; et
dans lequel la surface fondue totale (40) est la section transversale combinée de la couche de rechargement (42) et de la surface fondue du substrat (38) ;
dans lequel la couche de rechargement (24) est appliquée sur toute la surface d'un terrain inséré (12).

2. Procédé de rechargement d'un trépan de forage rotatif (2) pour produire le trépan de forage rotatif selon la revendication 1 utilisant le transfert de métal à froid (CMT) comprenant les étapes suivantes :
- mise en contact d'une surface (26) d'un composant de trépan de forage rotatif (2) avec un métal d'apport de rechargement (30) relié à une buse de soudage (28) pour établir un arc (34) entre la surface (26) et le métal d'apport (30) et former un bain de soudure fondu (36) comprenant le métal d'apport (30) et un matériau de la surface ;
- extension du métal d'apport (30) dans le bain de soudure fondu (36) pour court-circuiter l'arc (34) ;
- retrait du métal d'apport (30) du bain de soudure fondu (36) pour rétablir l'arc (34) ;
- déplacement de la buse de soudage (28) le long de la surface (26) ; et
- ré-extension du métal d'apport (30) dans le bain de soudure fondu (36) pour court-circuiter l'arc (34), dépôt de métal d'apport supplémentaire (30) dans le bain de soudure fondu (36) et liquéfaction du matériau supplémentaire de la surface (26) dans le bain de soudure fondu (36) ;
dans lequel le métal d'apport (30) est un fil de soudage solide à base de fer, composé de métaux formant des carbures sélectionnés parmi les métaux de transition des groupes IVA, VA et VIA.
